# EUROPÄISCHE PATENTSCHRIFT

(11) **EP 1 072 670 B1**
(45) Veröffentlichungstag und Bekanntmachung des Hinweises auf die Patenterteilung: **09.09.2015**
(21) Anmeldenummer: 00115192.7
(22) Anmeldetag: 13.07.2000
(51) Int. Cl.: C09K 21/02, F27D 1/16, C04B 35/66

(54) **Anwendung TiO2-haltiger partikulärer Materialien für feuerfeste Erzeugnisse**
Use of TiO2 containing particulate material for refractory products
Utilisation des particules contenant TiO2 pour des produits réfractaires

(30) Priorität: 27.07.1999 DE 19935251
(43) Veröffentlichungstag der Anmeldung: 31.01.2001
(73) Patentinhaber: Sachtleben Chemie GmbH, 47198 Duisburg (DE)
(72) Erfinder: Amirzadeh-Asl, Djamschid, Dr., 47445 Moers (DE); Fünders, Dieter, Dr., 47198 Duisburg (DE)
(74) Vertreter: Nobbe, Matthias

(56) Entgegenhaltungen:
- EP-A- 0 859 063
- DE-A- 2 125 073
- DE-A- 2 213 906
- DE-C- 4 304 724
- DE-C- 4 419 816

## Beschreibung

Die Erfindung betrifft die Anwendung TiO₂ -haltiger partikulärer Materialien als Zusatz für aus einem Gemenge von Zuschlagstoffen und wenigstens einem Bindemittel bestehenden feuerfesten Erzeugnissen.

Feuerfeste Erzeugnisse, basieren im wesentlichen auf den sechs Grundoxiden SiO2, Al₂O₃, MgO, CaO, Cr₂O₃ und ZrO₂ bzw. auf Verbindungen zwischen ihnen, gelegentlich in Kombination mit Kohlenstoff oder Graphit. Zum Kohlenstoff kommen Silicumcarbid und in geringen Mengen für spezielle Anwendungen noch Borcarbid und Nitride. Feuerfeste Erzeugnisse werden u.a. für die Zustellung großer Felder von Anlagen für thermische Prozesse, wie Schmelz-, Brenn- und Wärmeanlagen, sowie für Transportgefäße, insbesondere in der Eisen- und Stahlindustrie, eingesetzt; sie werden am Verwendungsort meist hinter Schalungen im Anlieferungszustand oder nach Zugabe von Flüssigkeit eingebracht und bilden nach Erhärtung die fugenfreie Zustellung der Anlagen. Diese ungeformten feuerfesten Erzeugnisse werden in Feuerbetone, plastische Massen, Stampfmassen, Stichlochmassen, Spritzmassen, Mörtel, Trockenmassen, Einpreßmassen und Massen für den Oberflächenschutz eingeteilt. Als Bindemittel kommen hydraulisch aushärtende Stoffe, wie Zement, Tonerdeschmelzzement und Elektrofilterasche, sowie anorganische oder organisch durch chemische Reaktion aushärtende Stoffe in Betracht.

Unter dem Einfluß metallurgischer Schlacken und Schmelzen unterliegen die feuerfesten Zustellungen einem erheblichen Verschleiß durch Korrosion und Infiltration. Die Korrosion erfolgt durch den chemischen Angriff der Ofenbeschickung, der Schmelze, der flüssigen Schlacken und/oder des Ofenstaubs. Als Reaktionsprodukte entstehen u. a. eutektische Schmelzen, die ablaufen oder abtropfen. Bei der Infiltration dringen Schlacken oder Reaktionsschmelzen unter Einwirkung von Kapillarkräften in die Poren der feuerfesten Zustellung. Durch das in einer feuerfesten Zustellung vorhandene Temperaturgefälle dringt die Schmelze so tief in diese ein, bis sie erstarrt. Es können sich während der Erstarrung Teilschmelzen mit niedrigerer Erstarrungstemperatur bilden, die weiter zur kalten Seite der feuerfeten Zustellung wandern. Dadurch entsteht eine Gliederung in Zonen mit wechselnder chemischer und mineralogischer Zusammensetzung. Eine ähnliche Zonengliederung kommt zustande, wenn Komponenten der Schmelze mit Komponenten der feuerfesten Zustellung Mischkristalle bilden und dadurch der Schmelze entzogen werden. Als Folge davon kommt es bei Temperaturwechseln zur Rißbildung und zum Abplatzen.

Aus dem Dokument DE 44 19 816 C ist ein titanhaltiger Zuschlagstoff und dessen Verwendung zur Erhöhung der Haltbarkeit der feuerfesten Ausmauerung eines Ofens und als Schlackenbildner bekannt. Diese Zusammensetzung eignet sich jedoch nur gut zur Reparatur dünner feuerfester Auskleidungen in Öfen und dazu, gute Ergebnisse als Schlackenbildner zu erzielen. Weiterhin ist aus dem Dokument DE 43 04 724 C bekannt einen titanhaltigen Zuschlagstoff als Ersatz für den bisher bei metallurgischen Prozessen als verwendeten Zuschlagstoff einzusetzen. Dazu wird vorgeschlagen, anstatt natürlichen Ilmenit bereitzustellen und diesen zur Erhöhung der Haltbarkeit der feuerfesten Ausmauerung eines Ofens zu verwenden, einen titanhaltigen Zuschlagstoff, bestehend aus Rückständen der TiO₂-Herstellung und einem oder mehreren Bestandteilen, ausgewählt aus Kohle, kohlehaltigen Rückständen, Eisen, Eisenoxid, eisen- oder eisenoxidhaltigen Rückständen einzusetzen. In beiden Fällen erfolgt der Einsatz in der Weise, dass der titanhaltige Zuschlagstoff als Pulvergemisch und in Form von Formkörpern den metallurgischen Schmelzen zugesetzt werden und ihre Wirkung auf der zur Schmelze gerichteten Oberfläche der feuerfesten Ausmauerung entfalten.

Das Dokument EP 0 859 063 A beschreibt ein Verfahren zur Herstellung eines 5 bis 90 Gew.% Titandioxid enthaltendem Zuschlagstoffs für den Einsatz bei der schmelzmetallurgischen Erzeugung metallischer Werkstoffe. Der dazu notwendige Herstellungsaufwand soll dadurch gesenkt werden, daß eine Mischung, bestehend zu 20 bis 80 Gew.% aus Titan bzw. Titanverbindungen enthaltenden Rückständen und zu 20 bis 80 Gew.% aus Eisen bzw. Eisenverbindungen enthaltenden Rückständen, bei Temperaturen von 200 bis 1300°C thermisch behandelt wird.

Auch in dem Dokument DE-OS 2213906 wird ein feuerbeständiges Material beschrieben, das Aluminiumoxid, Kieselerde, Eisenoxid, Titanoxid, Magnesiumoxid, wie auch Kohlenstoff enthält. Als besonderes Merkmal enthält dieses Material Borsäure. Das erhaltene Material soll dadurch ausgezeichnet sein, dass es nicht zerstört wird und unter der chemischen Einwirkung von Eisen- und Manganoxiden wie auch unter Einwirkung hoher Temperaturen nicht rissig wird, da sich an der Oberfläche eine feuer- und temperaturwechselbeständige Rinde bildet.

Es ist die Aufgabe der vorliegenden Erfindung, feuerfeste Erzeugnisse, besonders ungeformte, hinsichtlich insbesondere gleichbleibender Materialqualität und konstanter chemischer Zusammensetzung durch neue Stoffkombinationen zu verbessern, um dadurch den Verschleiß durch Korrosion und Infiltration zu mindern und um maßgeschneiderte Problemlösungen anbieten zu können.

Die Lösung dieser Aufgabe besteht in einem feuerfesten Erzeugnis aus einem Gemenge von Zuschlagstoffen, wenigstens einem Bindemittel und einem Zusatz, wobei der Zusatz aus synthetischen TiO₂₋haltigen partikulären Materialien mit einer mittleren Korngröße d₅₀ von 0,2 bis 2000 µm, besteht.

Vorteilhafterweise ist das feuerfeste Erzeugnis eines, dessen Zusatz aus synthetischen TiO₂-haltigen partikulären Materialien mit einer mittleren Korngröße d₅₀ von 1 bis 500 µm besteht.

Besonders bevorzugt ist, daß der Zusatz aus synthetischen TiO₂-haltigen partikulären Materialien mit einer mittleren Korngröße d50 von < 100 µm besteht.

Das feuerfeste Erzeugnis ist bevorzugt eines, bei dem der Zusatz, bezogen auf den TiO₂ -Gehalt vorzugsweise 2 bis 50 Gew.-% des Gemenges beträgt.

Die zugesetzte Menge an TiO₂-haltigen partikulären Materialien im feuerfesten Erzeugnis ist vorzugsweise bis zu 90% Gew. durch einen oder mehrere der Stoffe Eisenoxide, SiO₂, Al₂O₃, Kohle, CaO, MgO, Borate und Boroxide ersetzt.

Das feuerfeste Erzeugnis ist auch eines, bei dem die Zuschlagstoffe im wesentlichen Al₂O₃, SiO₂ und Alumosilikate sind.

Für eine optimale Lösung der erfindungsgemäßen Aufgabe hat sich ein feuerfestes Erzeugnis als günstig erwiesen, bei dem die Zuschlagstoffe im wesentlichen Magnesia, Dolomit, Chrommagnesia, Chromerz und Spinell sind.

Weiterhin vorteilhaft ist ein feuerfestes Erzeugnis bei dem die Zuschlagstoffe im wesentlichen Siliciumcarbid, Siliciumnitrid, Zirkonsilikat, Zirkonoxid, Borate und Boroxide sind.

Das feuerfeste Erzeugnis ist bevorzugt eines, das als gegossenes oder geformtes und ggf. vorbehandeltes Formteil (Block) vorliegt.

Seit vielen Jahren ist es bekannt, TiO₂-haltige Materialien zur Minderung des Verschleißes und der Ausbesserung schadhafter Stellen im Gestell von Hochöfen einzusetzen.

Die Reaktionsprodukte der titanhaltigen Materialien lagern sich besonders an korrodierten und erodierten Stellen im Gestell ab, führen zum Aufbau einer neuen Schutzschicht und bewirken damit einen Korrosions- sowie Erosionsschutz. Als Titanträger werden dafür natürliche Rohstoffe, wie Stückilmenit, Ilmenitsand und synthetische Titanträger verwendet. Es bilden sich hochtemperaturbeständige sowie korrosionsfeste Titanverbindungen in Form von Nitriden und Carbiden, die sich in den Schadstellen ablagern und einen sogenannten "Heißreparatureffekt" bewirken. Daneben wird durch Titanoxide und dadurch ausgelöste Folgereaktionen die Viskosität von Roheisen erhöht, wodurch eine Senkung der Wandtemperatur erzielt und damit der Verschleiß der Zustellung gehemmt wird.

Der Einsatz natürlicher Titanträger ist infolge der Gehalte an Begleitstoffen, der nicht konstanten chemischen Zusammensetzung, der ungünstigen mineralogischen Zusammensetzung - TiO₂ liegt in Form von FeTiO₃ (Ilmenit) bzw. Fe₂TiO₅ vor - und der Körnung sowie der Geometrie der Körner begrenzt.

Synthetische Titanträger haben gegenüber den natürlichen Titanträgern den Vorteil, daß der benötigte Anteil an TiO₂ sofort für die gewünschte Reaktion zur Verfügung steht, während der stabilere Ilmenit erst vom System energie- und zeitaufwendig zersetzt werden muß, bevor TiO₂ physikalischchemisch wirksam werden kann. Die mittlere Partikelgröße d₅₀ < 100 µm der synthetischen Titanträger ermöglicht eine für den Einsatzzweck benötigte sehr hohe Reaktionskinetik. Der Eisenoxidgehalt der synthetischen Titanträger schmilzt schon bei sehr geringen Temperaturen auf, so daß sich das TiO₂ in diesen aufgeschmolzenen Eisentröpfchen auflöst. Bei Anwesenheit von elementarem bzw. gelöstem Kohlenstoff oder Stickstoff wird das TiO₂ zu gelöstem Titan reduziert, das sich sofort mit gelöstem Kohlenstoff bzw. Stickstoff zu Titancarbid, Titannitrid oder Titancarbonitrid verbindet. Diese Reaktion ist eine Phasengrenzreaktion, die sich auf der Oberfläche der Eisentröpfchen abspielt. Die ausgeschiedenen Kristalle aus Titancarbid, Titannitrid und Titancarbonidtrid wachsen bis hin zu einer kinetischen Hemmung. Treffen diese Tröpfchen auf eine poröse, feuerfeste Oberfläche, so werden die verschleißfesten Titanverbindungen auf der Oberfläche abgelagert. Die abgelagerten Kristalle wachsen immer mehr und versiegeln die Oberfläche des feuerfesten Werkstoffs mit einem dichten Überzug. Aufgrund der Feinheit der Partikel der synthetischen Titanträger werden die natürlichen Poren des feuerfesten Werkstoffs zu einem großen Teil mit synthetischen Titanträgern aufgefüllt, so daß ein Eindringen von flüssiger Schlacke und/oder Schmelze in diese Poren deutlich erschwert ist. Dringen dennoch flüssige Schlacke bzw. Schmelze in die Poren ein, reagieren die dort vorhandenen synthetischen Titanträger dahingehend, daß aufgrund der stark ansteigenden Temperaturen der Eisenanteil an dem synthetischen Titanträger aufschmilzt, der Anteil an TiO₂ darin aufgelöst wird und gemeinsam durch den Kohlenstoffgehalt der Grundsubstanz bzw. dem anfangs dem synthetischen Titanträger beigemischten Kohlenstoffträger, wie vorstehend beschrieben, zu Titannitrid bzw. Titancarbonitrid reagiert

## Patentansprüche

1. Feuerfestes Erzeugnis aus einem Gemenge von Zuschlagstoffen, wenigstens einem Bindemittel und einem Zusatz, **dadurch gekennzeichnet, dass** der Zusatz aus synthetischen TiO₂-haltigen partikulären Materialien mit einer mittleren Komgröße d₅₀ von 0,2 bis 2000 µm besteht.

2. Feuerfestes Erzeugnis gemäß Anspruch 1, **dadurch gekennzeichnet, dass** der Zusatz aus synthetischen TiO₂-haltigen partikulären Materialien mit einer mittleren Korngröße d₅₀ von 1 bis 500 µm besteht.

3. Feuerfestes Erzeugnis gemäß Anspruch 1 oder 2, **dadurch gekennzeichnet, dass** der Zusatz aus synthetischen TiO₂-haltigen partikulären Materialien mit einer mittleren Korngröße d₅₀ von < 100 µm besteht.

4. Feuerfestes Erzeugnis gemäß einem der Ansprüche 1 bis 3, **dadurch gekennzeichnet, dass** der Zusatz, bezogen auf den TiO₂-Gehalt, 2 bis 50 Gew.-% des Gemenges beträgt.

5. Feuerfestes Erzeugnis gemäß einem der Ansprüche 1 bis 4, **dadurch gekennzeichnet, dass** bis zu 90 Gew.-% des Zusatzes durch einen oder mehreren der Stoffe Eisenoxide, SiO₂, Al₂O₃, Kohle, CaO, MgO, Borate und Boroxide ersetzt ist.

6. Feuerfestes Erzeugnis gemäß einem der Ansprüche 1 bis 5, **dadurch gekennzeichnet, dass** die Zuschlagstoffe im wesentlichen Al₂O₃, SiO₂ und Alumosilikate sind.

7. Feuerfestes Erzeugnis gemäß einem der Ansprüche 1 bis 6, **dadurch gekennzeichnet, dass** die Zuschlagstoffe im wesentlichen Magnesia, Dolomit, Chrommagnesia, Chromerz und Spinell sind.

8. Feuerfestes Erzeugnis gemäß einem der Ansprüche 1 bis 7, **dadurch gekennzeichnet, dass** die Zuschlagstoffe im wesentlichen Siliciumcarbid, Siliciumnitrid, Zirkonsilikat, Zirkonoxid, Borate und Boroxide sind.

9. Feuerfestes Erzeugnis gemäß einem der Ansprüche 1 bis 8, **dadurch gekennzeichnet, dass** es als gegossenes oder geformtes und ggf. vorbehandeltes Formteil (Block) vorliegt.

## Claims

1. A refractory product of a mixture of aggregates, at least one binder and an additive, **characterized in that** the additive consists of synthetic titanium dioxide-containing particulate materials having a median particle size d₅₀ of 0.2 to 2000 µm.

2. The refractory product according to claim 1, **characterized in that** the additive consists of synthetic TiO₂-containing particulate materials having a median particle size d₅₀ of 1 to 500 µm.

3. The refractory product according to claim 1 or 2, **characterized in that** the additive consists of synthetic TiO₂-containing particulate materials having a median particle size d₅₀ of < 100 µm.

4. The refractory product according to any one of claims 1 to 3, **characterized in that** the additive, referred to the TiO₂-content, amounts to 2 to 50 wt.% of the mixture.

5. The refractory product according to any one of claims 1 to 4, **characterized in that** up to 90 wt.% of the additive is replaced with one or more of the materials of iron oxide, SiO₂, Al₂O₃, charcoal, CaO, MgO, borate and boron oxide.

6. The refractory product according to any one of claims 1 to 5, **characterized in that** the aggregates are substantially Al₂O₃, SiO₂ and aluminum silicate

7. The refractory product according to any one of claims 1 to 7, **characterized in that** the aggregates are substantially magnesia, dolomite, chrome magnesia, chrome ore and spinel.

8. The refractory product according to any one of claims 1 to 7, **characterized in that** the aggregates are substantially silicon carbide, zirconium silicate, zirconium oxide, borate and boron oxide.

9. The refractory product according to any one of claims 1 to 8, **characterized in that** the aggregates is present as a cast or molded and optionally shaped piece (block).

## Revendications

1. Produit réfractaire composé d'un mélange d'agrégats, d'au moins un liant et un additif, **caractérisé en ce que** l'additif est composé de matériaux particulaires synthétiques contenant du TiO₂ d'une taille de grain moyenne d₅₀ de 0,2 à 2000 µm.

2. Produit réfractaire selon la revendication 1, **caractérisé en ce que** l'additif est composé de matériaux particulaires synthétiques contenant du TiO₂ d'une taille de grain moyenne d₅₀ de 1 à 500 µm.

3. Produit réfractaire selon la revendication 1 ou 2, **caractérisé en ce que** l'additif est composé de matériaux particulaires synthétiques contenant du TiO₂ d'une taille de grain moyenne d₅₀ < 100 µm.

4. Produit réfractaire selon l'une des revendications 1 à 3, **caractérisé en ce que** l'additif représente, par rapport à la teneur en TiO₂, de 2 à 50 % en poids du mélange.

5. Produit réfractaire selon l'une des revendications 1 à 4, **caractérisé en ce que** jusqu'à 90 % en poids de l'additif sont remplacés par une ou plusieurs des substances suivantes : oxydes de fer, SiO₂, Al₂O₃, charbon, CaO, MgO, borates et oxydes de bore.

6. Produit réfractaire selon l'une des revendications 1 à 5, **caractérisé en ce que** les agrégats sont essentiellement de l'Al₂O₃, du SiO₂ et des aluminosilicates.

7. Produit réfractaire selon l'une des revendications 1 à 6, **caractérisé en ce que** les agrégats sont essentiellement de la magnésie, de la dolomite, de la magnésie-chrome, du minerai de chrome et du spinelle.

8. Produit réfractaire selon l'une des revendications 1 à 7, **caractérisé en ce que** les agrégats sont essentiellement du carbure de silicium, du nitrure de silicium, du silicate de zirconium, de l'oxyde de zirconium, des borates et oxydes de bore.

9. Produit réfractaire selon l'une des revendications 1 à 8, **caractérisé en ce qu'**il se présente sous la forme d'une pièce préformée (bloc) coulée ou moulée et le cas échéant prétraitée.
